Europäisches Patentamt

European Patent Office

Office européen des brevets

(19)

(11) Veröffentlichungsnummer: **0 051 579**
**B1**

(12) ## EUROPÄISCHE PATENTSCHRIFT

(45) Veröffentlichungstag der Patentschrift:
10.07.85

(51) Int. Cl.⁴: **G 07 F 17/32**, G 07 F 7/08

(21) Anmeldenummer: **81890186.0**

(22) Anmeldetag: **30.10.81**

(54) Spielautomaten.

(30) Priorität: **31.10.80 AT 5384/80**

(43) Veröffentlichungstag der Anmeldung:
**12.05.82 Patentblatt 82/19**

(45) Bekanntmachung des Hinweises auf die Patenterteilung:
**10.07.85 Patentblatt 85/28**

(84) Benannte Vertragsstaaten:
**BE CH DE FR GB IT LI NL SE**

(56) Entgegenhaltungen:
**DE - A - 2 239 890**
**DE - A - 2 803 214**
**FR - A - 2 279 162**
**FR - A - 2 374 702**
**FR - A - 2 403 597**

(73) Patentinhaber: **Mothwurf, Ewald, U.Plattenweg 14,
A-8043 Graz (AT)**
Patentinhaber: **Aigner, Bernd, Fabrikstrasse 15,
A-8530 Deutschlandsberg (AT)**

(72) Erfinder: **Mothwurf, Ewald, U.Plattenweg 14,
A-8043 Graz (AT)**
Erfinder: **Aigner, Bernd, Fabrikstrasse 15,
A-8530 Deutschlandsberg (AT)**

(74) Vertreter: **Gibler, Ferdinand, Dipl.Ing.Dr.tech.,
Dorotheergasse 7, A-1010 Wien (AT)**

## Beschreibung

Die Erfindung bezieht sich auf einen Spielautomat bei dem das Spiel selbst gewöhnlich mit Münzen durchgeführt wird, mit einer Steuerung nur für das Betriebsbereitstellen durch Eingabe eines Werttträgers.

Durch die DE-AS-2 803 212 wurde ein Spielautomat bekannt bei dem eine Wertkarte das Betriebsbereitstellen und das Spielen selbst steuert.

Damit läßt sich zwar der Spielablauf vereinfachen, da auf eine Manipulation mit Münzen oder Chips verzichtet werden kann und sowohl die Abbuchung von den einzelnen Spielen entsprechenden Werten und die Gutschrift von allfälligen Gewinnen einfach auf der Wertkarte erfolgt.

Bei Spielautomaten, wie Roulettspielautomaten, Glücksspielautomaten aber auch andere anders geartete Unterhaltungsautomaten ergibt sich nicht nur das Problem eines einfachen Spielablaufs sondern auch das Problem der Überwachung des Umsatzes zwischen

a)  Aufstellerorganisation, wie z. B. der Spielautomatenhersteller und dem Interessenten, wie z. B. dem Platzhalter z. B. Casino,
b)  Gerät und Finanzamt,
    möglichst einfach zu gestalten und dabei Manipulationen möglichst zu verhindern, So ist z. B. die Anzahl der in den Geldspielautomaten geworfenen Münzen und der eventuell ausgezahlten Münzen vor allem im Nicht-Kasinobereich schwer überprüfbar.

Dieses Problem wird aber im bekannten Fall durch die Verwendung von Wertkarten keineswegs gelöst.

Die Erfindung bezweckt die Ermöglichung einer exakten Abrechnung zwischen Aufstellerorganisation und Interessenten und zwischen Gerät und Finanzamt. Dieses Ziel wird dadurch erreicht, daß als Steuerung nur für das Betriebsbereitstellen ein an sich bekannter Wertkartenleser verwendet wird, der eine eine Umsatzüberwachung gestattende Einrichtung zum Lesen und gezielten Löschen von auf der Wertkarte aufgebrachten Werten aufweist, wobei auf der Wertkarte Werteinheiten aufbringbar und löschbar sind. Durch diese Maßnahmen ist es auf sehr einfache Weise möglich, den mit dem Automaten erzielten Umsatz zu ermitteln.

So ist es bei einem erfindungsgemäßen Automaten möglich diesen nur durch Einschub einer Wertkarte betriebsbereit zu machen, wobei für den eigentlichen Spielbeginn dann noch der Einwurf einer Münze oder dergleichen erforderlich ist. Von dieser Wertkarte kann durch die Einrichtung zur Umsatzüberwachung mit jedem Spiel, abhängig von der Einsatzhöhe des Spielers, ein entsprechender Teil des Wertes der Wertkarte abgeschrieben werden, wobei bei Erreichung des Wertnullstandes der Automat blockiert wird.

Erst durch Einschieben einer neuen Wertkarte mit noch gültigen Wertsymbolen kann der Automat wieder in Betrieb genommen werden. Als Wertkarte kann eine Magnetstreifenkarte, eine Lochkarte, ein Hologrammträger oder ein anderer mit durch einen geeigneten Leser erkennbaren Symbolen ausgestatteter Datenträger verwendet werden. Es ist dabei zweckmäßig, daß zur Verhinderung von Fälschungen die Werte und Daten kodierbar auf die Wertkarten aufbringbar sind und der Wertkartenleser eine Dekodiereinrichtung aufweist. Das Spiel selbst wird gewöhnlich mit Münzen durchgeführt, lediglich die Inbetriebnahmeberechtigung und das Bezahlen der Abgabe wird mit der Wertkarte und dem Wertkartenleser kontrolliert und gesteuert.

Eine über jeden Zweifel erhabene Institution, z. B. das Münzamt, kann die Produktion der Wertkarten übernehmen, wobei eventuelle Abgaben direkt beim Verkauf einbehalten werden können. Zum Beispiel bei Hologrammwertkartenträgern aber auch bei Magnetkartenträgern mit kodierten Aufzeichnungen sind die direkten Produktionskosten einer Wertkarte gering, die Produktionsanlage jedoch kostspielig. Es ist jedoch nur eine Produktionsanlage nötig. Durch die hohen Kosten der Produktionsanlage ist eine Fälschung weitgehend ausgeschlossen. Der Betreiber eines Automaten muß sich Wertkarten besorgen und ist erst dadurch in der Lage Automatenumsätze zu erreichen.

Die bekannten Geldspielautomaten sind bisher vor dem Einwurf einer oder mehrerer Münzen, die bei elektronischen Spielautomaten entsprechende Einschaltimpulse ausgelöst haben, spielbereit geschaltet worden. Zum Einschalten der Spielbereitschaft wird nun der Wertkartenleser verwendet. Die Wertkartenleser lassen sich, wenn ein Ausgang zur Abgabe der entsprechenden Impulse eingerichtet ist, sehr rasch bei bestehenden Spielautomaten anwenden. Falls mechanische Einschaltgänge notwendig sind, ist es lediglich notwendig, den Wertkartenleser mit entsprechenden Umsetzer und Auslöser auszustatten.

Derartige Wertkartenlesegeräte sind bekannt. Als Beispiel wird angeführt das Kartenlesegerät SK 30 der Fa. SODECA-SAIA. Dabei wird das holographische Verfahren verwendet. Ein Hologramm enthält Informationen über Richtung, Intensität und Phasenlage des Lichtes. Diese Informationen werden als Kodierung verwendet. Auf der Wertkarte wird eine ultrafeine optische Struktur aufgebaut, die das Hologramm enthält, wobei der hohe technische Aufwand zum Erzeugen, Aufzeichnen und Dekodieren des Hologramms Schutz gegen Fälschung gewährt. Die Entwertung der Werteinheit erfolgt nach dem Lesen der Werteinheit durch das Kartenlesegerät durch irreversible physikalische Zerstörung eines Teiles des Hologramms. Nach Einführen der Karte wird die Kodierung der Karte vom Lesekopf geprüft und analysiert und das Ergebnis in Form von elektrischen Signalen als Steuerbefehle weitergegeben. Der Steuerbefehl wird zum Einschalten des Spielautomaten und zur Angabe der möglichen Spiele verwendet, wobei eine Möglichkeit besteht, zunächst den Kreditinhalt der Karte im Lesegerät zu prüfen, ohne etwas zu konsumieren.

Auf den Wertkarten kann eine bestimmte Zahl von Werteinheiten auf eine Spur der Karte aufgebracht werden. Es ist auch möglich weitere Kodes zu verwenden, um eine bestimmte Spielberechtigung nachzuweisen. Es können auch weitere Kodierungen, z. B. über Land und Anwendungstyp, Verteiler, Käufergruppen, Kunde, Art der Dienstleistung, Datum, Gültigkeitsdauer und Werteinheit, aber auch Gültigkeitsbits, die ein Löschen der Karte bei Verlust oder Diebstahl ermöglichen, aufgebracht werden.

Das beschriebene Gut liefert an der Schnittstelle 20 mA, welches für die Speisung von Einschalt- und Steuerungsübersetzer verwendet werden kann.

Es gibt daneben noch andere Wertkartenleser, die auf magnetischer Basis oder mit Lochkarten funktionieren.

Ein Nachteil dieser Wertkartenleser besteht darin, daß das System der Wertkartenbehandlung unterschiedlich vom Systemaufbau der nunmehr üblichen elektronischen Spielautomaten ist. Mechanische Wertkartenleser benötigen eine störanfällige und aufwendige mechanische Einrichtung. Holographische Wertkartenleser benötigen teure Lichterzeuger und Auswerteanlagen für holographische Systeme.

Eine Ausführungsart der Erfindung beseitigt diese Nachteile dadurch, daß ein nichtflüchtiger Speicher mit einer Anzahl von Speicherzellen vorgesehen ist, wobei zur Entwertung dem Wert entsprechende Speicherzellen überschrieben werden.

Es wird insbesondere vorgeschlagen, daß als Speicher ein EPROM (Electrically programmable memory) verwendet ist. Derartige Speicher sind als Chips bekannt und zu günstigen Preisen erhältlich. Das Beschreiben derartiger Speicher erfolgt mit elektronischen Impulsen, also ähnlichen Einrichtungen, die auch zur Steuerung moderner Spielautomaten verwendet werden. Durch die Vielzahl von Systemen zur Erzeugung derartiger Impulse und Impulssteueranlagen sind diese kostengünstig erhältlich und störunanfällig. Zum Beispiel kann ein nichtflüchtiger Speicher im Inneren einer Berechtigungskarte verwendet werden, der z. B. 17 · 8 bit aufweist. Die Beaufschlagung eines bits bedeutet jeweils das Abbuchen einer Werteinheit. Dies kann so lange erfolgen, bis sämtliche bits beaufschlagt sind und die Speicherkarte damit voll ist.

Zweckmäßig wird vorgeschlagen, daß eine Speichermatrix vorgesehen ist und eine oder mehrere Speicherzellen mit einem Berechtigungscode versehen sind. Der Berechtigungscode wird für den jeweiligen Verwendungszweck beaufschlagt und bewirkt für einen Leser, der mit dem Gerät verbunden ist, daß das Gerät eingeschaltet wird. Zweckmäßig ist dabei eine Sicherung eingebaut, die ein Löschen des Speicherinhaltes ohne Löschen des Berechtigungscodes verhindert. Der Kunde kauft z. B. eine Karte, auf der z. B. 100 Speicherzellen (Krediteinheiten) gelöscht sind. Nach Einschieben der Speicherkarte, wobei z. B. der Plastikriegel abgebrochen werden kann, der Nachweis, daß die Speicherkarte bereits benützt wurde, überprüft eine Lesereinheit, ob der entsprechende Speichercode vorhanden ist, und ermöglicht dann die Entwertung mit entsprechenden Impulsgebern durch Belegung von Speicherzellen und gibt sodann den Spielapparat frei. Sind alle Speicherzellen überschrieben, so ist die Wertkarte wertlos geworden. Die Identifikation und der Einschaltcode sind so geschaltet, daß er bei dem Versuch, die Belegung also die bereits verbrauchten Speicherstellen zu löschen, gleichfalls gelöscht wird. Damit wird bei einem Versuch die Karte zu löschen, um den Kredit mißbräuchlich zu erneuern, der Code gelöscht, was die Karte wertlos macht. Das System hat den Vorteil, daß es elektronische Elemente verwendet, die den in Automaten verwendeten elektronischen Elementen gleichen und daher einfach und preisgünstig im Aufbau ist. Darüber hinaus lassen sich Prüfeinrichtungen preisgünstig herstellen.

Die Erfindung ist an Hand eines in den Zeichnungen dargestellten Ausführungsbeispielen näher erläutert, ohne sich darauf zu beschränken. In

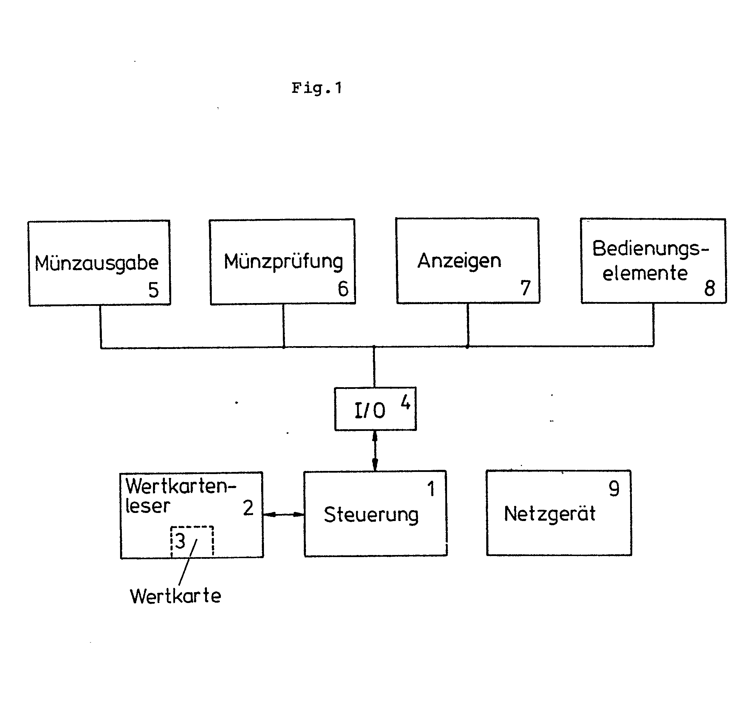

Fig. 1 ist ein Blockschaltbild eines Spielautomaten gezeigt,

Fig. 2 zeigt ein Blockdiagramm eines Wertkartenlesers schematisch,

Fig. 3 die Ansicht einer Wertkarte,

Fig. 4 eine Anwendungsschaltung, und

Fig. 5 das Schema einer 17 · 8-bit-Matrix.

In der Zeichnung ist ein Blockschaltbild eines Spielautomaten gezeigt. Die Steuerung 1 des Spielgerätes, beispielsweise Roulettes, steuert über die Input-Output-Bausteine 4 die Münzausgabe 5, die Münzprüfung 6, die Anzeigen 7 und die Bedienungselemente 8 des Spielgerätes. Mit einem Wertkartenleser 2 ist die Einschaltung der Steuerung 1 über eine Schnittstellenleitung, z. B. 24 Volt, 20-mA-Schleife, wie bereits beschrieben, verbunden. Die Schnittstellenleitung wird nur dann aktiviert, wenn in den Wertkartenleser 2 eine Wertkarte 3 eingeschoben ist und das auf der Wertkarte vorhandene Guthaben ausreichend ist, um den möglichen Höchstgewinn des Gerätes dem Spieler auszuzahlen und die Steuer od. dgl. auf der Wertkarte abbuchen zu können. Bei Durchführung eines Spieles wird der Spielsteuersatz auf jeden Fall abgebucht. Bei Besteuerung auf den Gewinn wird bei Auszahlung des Gewinnes durch die Münzausgabe von der Wertkarte die entsprechende Besteuerung durch eine Rückmeldung von der Steuerung 1 an den Wertkartenleser abgebucht. Die Besteuerung erfolgt dann über die Wertkarte. Falls eine Besteuerung über den Umsatz erfolgt, wird der entsprechende Umsatz von der Wertkarte abgenommen und der entsprechende Teil der Wertkarte gelöscht.

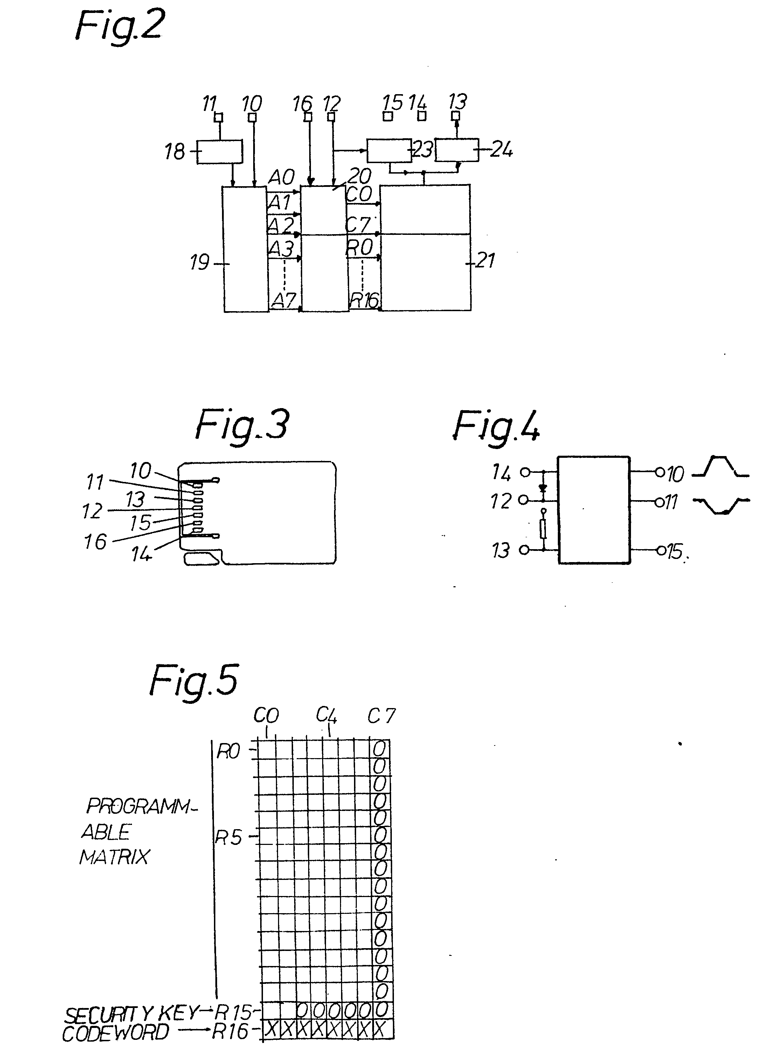

Die in Fig. 3 gezeigte Wertkarte wird entsprechend dem Blockdiagramm, wie es in Fig. 2 gezeigt wird, angeschlossen. Ein Taktgeber, der im Taktgebereingang 11 angeschlossen ist, veranlaßt über einen Phasengenerator 18 das schrittweise Durchlaufen eines 8-bit-Schieberegisters, wobei gleichzeitig der jeweiligen Stellung entsprechend über einen Adresscodeeingang 10 positive oder negative Impulse eingegeben werden. Über Adressleitungen A0, A1, A2 wird zunächst in einem Entschlüssler 20 die Berechtigung geprüft. Die dazu notwendigen Informationen wurden über den Programmierungssignaleingang 12 eingegeben, wobei eine Schutzsicherung 16 eingebaut ist, die nach Eingabe des Identifikationsprogrammes zerstört wird, so daß es unmöglich ist, ein anderes Decodierprogramm einzugeben. Über Leitungen C0 bis C7 werden entsprechend der in Fig. 5 gezeigten Matrix die Überprüfungen vorgenommen, worauf der Decoder entsprechend übereinstimmt und nur dann die Beaufschlagung der Kreditkarte freigegeben wird. Dies erfolgt über entsprechende Entwertungsimpulse über den Adresscodeeingang 10 während des Weiterschaltens des Schieberegisters, wobei durch Beaufschlagung entsprechender freier Speicherstellen die jeweilige Abbuchung erfolgt. Über eine Programmlogik 23 und einen Outputbuffer 24 erfolgt die Steuerung und die Möglichkeit der Prüfung des Inhaltes der Karte. Im einzelnen wird also die Matrix von 17 Zeilen von je 8 bit durch Serienladung eines inneren 8-bit-Schieberegisters adressiert. Die Parallelausgänge A0 bis A7 werden durch den Kolonnen- und Reihendecoder decodiert, um eine einzelne Zelle der Gedächtnismatrix zu adressieren. Der Inhalt dieser Zelle kann über den Ausgangsbuffer 24 kontrolliert werden.

Eine oder zwei Reihen der Matrix sind bei der Herstellung mit einem 8 bit-Wort beschrieben und nach dem Schreiben dieses Wortes oder Sicherheitsschlüssels wird die Schaltung mit welchem dieses Beschreiben erfolgt, durch Durchbrennen einer Sicherung zerstört, so daß es nicht mehr möglich ist, neu zu beschreiben. Wenn nun der Versuch gemacht wird, den Wert der Kreditkarte zu erneuern, also die beschriebenen Speicherstellen wieder zu löschen, wird als erstes der Sicherungsschlüssel gelöscht und es ist nicht mehr möglich, die Karte zu verwenden.

Selbstverständlich läßt das Ausführungsbeispiel Variationen, insbesondere in der Größe der Matrix, in der Steuerung, dem Programm, der Überprüfung usw., zu. Die Tastfrequenz liegt üblicherweise bei 100 kHz, es können jedoch auch Abweichungen davon verwendet werden, da es sich durchwegs um einfache elektronische Teile handelt, die betriebssicher sind und die zu den Steuerteilen des Spielautomaten passen und bequem durchzuführen sind.

**Patentansprüche**

1. Spielautomat bei dem das Spiel selbst gewöhnlich mit Münzen durchgeführt wird, mit einer Steuerung nur für das Betriebsbereitstellen durch Eingabe eines Wertträgers, dadurch gekennzeichnet, daß als Steuerung nur für das Betriebsbereitstellen ein an sich bekannter Wertkartenleser (2) verwendet wird, der eine eine Umsatzüberwachung gestattende Einrichtung zum Lesen und gezielten Löschen von auf der Wertkarte (3) aufgebrachten Werten aufweist, wobei auf der Wertkarte Werteinheiten aufbringbar und löschbar sind.

2. Spielautomat nach Anspruch 1, dadurch gekennzeichnet, daß als Wertkarte an sich bekannte Magnetstreifenkarten und als Wertkartenleser Magnetkartenleser verwendet sind.

3. Spielautomat nach Anspruch 1, dadurch gekennzeichnet, daß als Wertkarte an sich bekannte Lochkarten und als Wertkartenleser Lochkartenleser verwendet sind.

4. Spielautomat nach Anspruch 1, dadurch gekennzeichnet, daß als Wertkarte an sich bekannte Hologrammträger und als Wertkartenleser Hologrammleser verwendet sind.

5. Spielautomat nach einem der Ansprüche 1 bis 4, dadurch gekennzeichnet, daß die Werte und Daten kodierbar auf die Wertkarten aufbringbar sind und der Wertkartenleser eine Dekodiereinrichtung aufweist.

6. Spielautomat nach Anspruch 1, dadurch gekennzeichnet, daß auf der Wertkarte ein nichtflüchtiger Speicher mit einer Auswahl von Speicherzellen vorgesehen ist, wobei zur Entwertung dem Wert entsprechende Speicherzellen überschrieben werden.

7. Spielautomat nach Anspruch 6. dadurch gekennzeichnet, daß als Speicher ein EPROM (Electrically programmable memory) verwendet ist.

8. Spielautomat nach Anspruch 6 oder 7, dadurch gekennzeichnet, daß eine Speichermatrix vorgesehen ist und eine oder mehrere Speicherzellen mit einem Berechtigungscode versehen sind.

9. Spielautomat nach einem der Ansprüche 6 bis 8, dadurch gekennzeichnet, daß eine Sicherung eingebaut ist, die ein nachträgliches Löschen der Speicherstellen nur mit gleichzeitigem Löschen des Berechtigungscodes gestattet.

**Claims**

1. Gaming machine, in which the game itself is normally performed with coins, comprising a control system just for preparing the machine for operation by entering a value carrier, characterised in that as the control system just for preparing the machine for operation a value-card reader (2), known per se, is used which is provided with a device, permitting a monitoring of turnover, for reading and selective deleting of values applied to the value card (3), in which arrangement value units can be applied and deleted on the value card.

2. Gaming machine according to Claim 1, characterised in that as value cards, magnetic-strip cards, known per se, are used, and as value-card readers, magnetic-card readers are used.

3. Gaming machine according to Claim 1, characterised in that as value cards, punched cards, known per se, are used, and as value-card readers, punched-card readers are used.

4. Gaming machine according to Claim 1, characterised in that as value cards, hologram carriers, known per se, are used, and as value-card readers, hologram readers are used.

5. Gaming machine according to one of Claims 1 to 4, characterised in that the value and data can be applied to the value cards in a codeable manner and the value-card reader is provided with a decoding device.

6. Gaming machine according to Claim 1, characterised in that on the value card, a non-volatile memory comprising a selection of memory cells is provided, in which arrangement, for the purpose of cancellation, memory cells corresponding to the value are overwritten.

7. Gaming machine according to Claim 6, characterised in that as the memory, an EPROM (Electrically programmable memory) is used.

8. Gaming machine according to Claim 6 or 7, characterised in that a memory matrix is provided and one or several memory cells are provided with an authorisation code.

9. Gaming machine according to one of Claims 6 to 8, characterised in that a safeguard is incorporated which permits subsequent deletion of the memory locations only with simultaneous deletions of the authorisation code.

**Revendication**

1. — Appareil de jeu automatique avec lequel le jeu luimême s'effectue ordinairement avec des pièces de monnaie, comportant une commande seulement pour la mise en état de fonctionner par introduction d'un support de valeur, caractérisé par le fait que comme commande seulement pour la mise en état de fonctionner est utilisé un lecteur de cartes de valeur connu en soi (2) qui présente un dispositif, permettant un contrôle des transactions, pour la lecture et l'effacement dirigé de valeurs portées sur la carte de valeur (3), des unités de valeur pouvant être portées sur la carte de valeur et en être effacées.

2. — Appareil de jeu automatique selon la revendication 1, caractérisé par le fait que comme carte de valeur sont utilisées des cartes à bande magnétique connues et comme lecteur de cartes de valeur sont utilisés des lecteurs de cartes magnétiques.

3. — Appareil de jeu automatique selon la revendication 1, caractérisé par le fait que comme carte de valeur sont utilisées des cartes perforées connues et comme lecteur de cartes de valeur sont utilisés des lecteurs de cartes perforées.

4. — Appareil de jeu automatique selon la revendication 1, caractérisé par le fait que comme carte de valeur sont utilisés des supports d'hologramme connus et comme lecteur de cartes de valeur sont utilisés des lecteurs d'hologrammes.

5. — Appareil de jeu automatique selon l'une des revendications 1 à 4, caractérisé par le fait que les valeurs et données peuvent être portées de manière codable sur les cartes de valeur et le lecteur de cartes de valeur comporte un dispositif de décodage.

6. — Appareil de jeu automatique selon la revendication 1, caractérisé par le fait que sur la carte de valeur est prévue une mémoire non volatile ayant un choix de cellules de mémoire, et que, pour l'oblitération de la valeur, on écrit dans des cellules de mémoire correspondantes.

7. — Appareil de jeu automatique selon la revendication 6, caractérisé par le fait que comme mémoire est utilisée une EPROM (Electrically programmable memory).

8. — Appareil de jeu automatique selon l'une des revendications 6 et 7, caractérisé par le fait qu'il est prévu une matrice de mémoire et une ou plusieurs cellules de mémoire avec un code d'autorisation.

9. — Appareil de jeu automatique selon l'une des revendications 6 à 8, caractérisé par le fait qu'il est incorporé une sûreté qui permet l'effacement ultérieur des emplacements de mémoire seulement avec effacement simultané du code d'autorisation.

Fig.1

| Münzausgabe 5 | Münzprüfung 6 | Anzeigen 7 | Bedienungs-elemente 8 |

I/O 4

| Wertkarten-leser 2 | Steuerung 1 | Netzgerät 9 |

3

Wertkarte

# Fig.2

# Fig.3

# Fig.4

# Fig.5

PROGRAMM-
ABLE
MATRIX

SECURITY KEY → R15
CODEWORD → R16